# EUROPEAN PATENT APPLICATION

(11) **EP 2 735 377 A1**
(43) Date of publication of application: **28.05.2014**
(21) Application number: 12193910.2
(22) Date of filing: 22.11.2012
(51) Int. Cl.: B05D 1/18, B05D 1/30

(54) **Soap film coating**

(71) Applicant: Olin, Håkan, 857 33 Sundsvall (SE); Zhang, Renyun, 857 40 Sundsvall (SE)
(72) Inventor: Olin, Håkan, 857 33 Sundsvall (SE); Zhang, Renyun, 857 40 Sundsvall (SE)
(74) Representative: Nilsson, Lars

(57) **Abstract**

The present invention provides a method for coating a substrate. The method comprises the steps of a) penetrating at least one gas-liquid-gas interface with the substrate such that a composition present in the liquid and/or at the liquid-gas interface is coated on the substrate. The present invention further provides a coated substrate, wherein the coating has been applied according to the method for coating a substrate. Furthermore, the present invention provides a coating system for coating a substrate. The system comprises a sample holder for holding a substrate to be coated; a container for holding at least one gas-liquid-gas interface; means for moving the sample holder such that a substrate held by the sample holder penetrates at least one gas-liquid-gas interface held by the container.

## Description

### Technical Field of the Invention

The present invention relates to a method of coating thin films, such as multilayer thin films, at high coating speed, on substrate surfaces. The films may comprise nanoparticles.

### Background Art

There are many techniques for depositing thin films on substrate surfaces. Two commonly used methods are physical vapour deposition (PVD), with prominent techniques such as evaporation and sputtering, and chemical vapour deposition (CVD). The common characteristic of these methods is a requirement of vacuum or gas-chambers, which however lead to low coating speeds. The rate at which a substrate is coated may be several orders of magnitude lower compared e.g. to roll-to-roll techniques. Other low-speed methods include Langmuir-Blodgett (LB) and spin and dip coating, which may result in very thin films. For example, the LB technique may lead to a film being down to a single molecule thick. Methods involving the use of self-assembled monolayers (SAM), evaporation-driven self-assembly (EDSA) and dip-coating have also been used.

There are also methods in which coating is performed at high-speed. These include the doctor blade technique that i.a. the paper industry is using to coat micrometer thick layers when making ordinary office paper. For example, standard office paper has a cellulose fiber core of about 50 µm and on each side 5 µm thick clay films are coated. This coating is done with a doctor blade that mechanically spread out clay slurry at a speed of several tens of kilometers per hour. A specific technique that has been used to provide thin films is a roll-to-roll technique that utilizes vacuum deposition of the coating material onto the substrate. However, the use of vacuum leads to a very complex process that may be difficult and expensive to implement at large scale.

There have also been some limited attempts to use foam in coating processes in the paper industry. In such conventional foam coating techniques, a paper web is coated with foams that contain the particles that are to be coated on the paper, and the foams are then forced to collapse on the paper. See for example US 4,158,076 and EP 0826748.

To summarize, there are coating techniques in the prior art for coating very thin layers, such as nanometer thick layers, but these methods do not provide for coating at high speed. Present coating techniques for larger areas and at high speed are however not capable of coating nanometer thick layers.

The need for high-speed and nanometer thick layers arises when considering simple applications where the natural choice is roll-to-roll depositions such as coatings of paper or coatings of optical fibers. There is thus a need in the art for a coating technique that provides nanometer thick layer at high speed and on large areas.

### Summary of the Invention

It is an object/aim of the present invention to provide an improved method for coating thin films, such as multilayer thin films at high coating speed, on substrate surfaces.

As a first aspect of the invention, there is provided a method for coating a substrate comprising the step of
a) penetrating at least one gas-liquid-gas interface with the substrate such that a composition present in the liquid and/or at the liquid-gas interface is coated on the substrate.

As a second aspect of the invention, there is provided a coated substrate, wherein the coating has been applied according to the method according to the first aspect of the invention.

As a third aspect of the invention, there is provided a coating system for coating a substrate comprising a sample holder for holding a substrate to be coated; a container for holding at least one gas-liquid-gas interface; means for moving the sample holder such that a substrate held by the sample holder penetrates at least one gas-liquid-gas interface held by the container.

The above-mentioned objects as well as other objects of the invention, which can be gathered by a person skilled in the art after having studied the description below, are met by the different aspects of the disclosed invention.

### Detailed description of the Invention

As a first aspect of the invention, there is provided a method for coating a substrate comprising the step of
a) penetrating at least one gas-liquid-gas interface with the substrate such that a composition present in the liquid and/or at the liquid-gas interface is coated on the substrate.

Penetrating refers to both forcing the entire substrate through the at least one gas-liquid-gas interface and to penetrating the at least one gas-liquid-gas interface with a part of the substrate and then retracting the substrate.

The liquid may be a liquid solution, i.e. comprising dissolved molecules, or a liquid dispersion, i.e. with particles dispersed within the liquid. The liquid may be an aqueous liquid or an organic solvent. Consequently, the aqueous liquid may be an aqueous solution, an aqueous dispersion or an aqueous mixture, comprising both dissolved and dispersed molecules and particles.

A gas-liquid-gas (G-L-G) interface refers to an interface comprising a thin liquid phase or film with the gas on both sides of the film.

The at least one G-L-G interface may thus consist of or comprise a thin liquid film or films in gas, or comprise several G-L-G interfaces, such as in a foam.

The G-L-G interface may thus be a thin liquid film or a thin liquid membrane in air. A G-L-G interface thus comprises two individual interfaces, i.e. two gas-liquid (G-L) interfaces. Each G-L interface may for example be stabilized by appropriate stabilizers, such as surfactants, proteins or polymers. Consequently, the liquid may comprise surfactants or other surface active components, such as surface active polymers, for stabilizing the G-L-G interface.

In other words, the liquid of the G-L-G interface may thus comprise thin planar liquid lamellae in a gas.

The liquid may for example be an aqueous buffer solution. The gas may for example be air.

The thickness of the liquid at the G-L-G interface may be below 500 nm, such as below 250 nm, such as below 100 nm, such as below 50 nm.

The expression "such that a composition present in the aqueous solution and/or at the aqueous solution-gas interface is coated on the substrate" means that a composition present at the gas-aqueous solution interface, such as surfactants, proteins or polymers, is coated on the substrate as the substrate penetrates the interface, or alternatively, or as a compliment, the composition is present in the aqueous phase, such as dissolved or dispersed in the aqueous phase, and is coated on the substrate as the substrate penetrates the interface. For example, particles such as nanoparticles may be dispersed in the liquid and may be coated upon penetration of the substrate.

Thus, in other words, step a) may involve penetrating at least one gas-liquid-gas interface with the substrate, thereby coating the substrate with a composition present in the liquid and/or at the liquid-gas interface.

In embodiments of the first aspect, the method is further comprising the following steps prior to step a)
providing a liquid comprising a composition to be coated on the substrate;
forming at least one G-L-G interface using the liquid.

The step of forming at least one G-L-G interface may e.g. involve foaming the liquid or forming a thin liquid film in gas from the aqueous solution.

The first aspect of the invention is based on the inventors insight that penetrating at least one G-L-G interface with the surface to be coated provides for coating of nanometer thin layers, or multilayers, at high speed.

The lowest earlier reported coating thickness when using conventional foam coating, i.e. when a foam is spread out on a surface, is 0.3 g/m² of silica corresponding to a thickness of about 100 nm. The method of the present invention provides for coating of thinner layers since the minimum thickness of conventional foam coating may be the volume fraction of the entire thickness of the bubble walls, at the same particle concentration. In contrast, for the method of the present invention, the thickness may decrease with increasing speed and may typically be less than the thickness of the soap bubble. A further advantage of the method of the present invention compared to conventional foam coating is the formation of well ordered crystals of nanoparticles. Such crystals have not been shown when using conventional foam coating and the crystals could be important in applications such as photonic lattices. Furthermore, the uniformity of the coating may be higher compared to conventional foam coating since for example only a single uniformed soap film may be penetrated, whereas in conventional foam coating, each foam bubble will be a discrete instance of deposition.

In other words, as a substrate is forced through at least one G-L-G interface, such as a foam or a thin liquid film, a uniform coating of the composition present at the gas-liquid interface or in liquid is left on the surface. Thus, the present invention provides a method for high-speed, multilayer coatings and thus enables large-scale nanotechnology.

In embodiments of the first aspect, the at least one gas-liquid-gas interface of step a) is a foam.

A method according to the present invention in which a foam is the G-L-G interface is herein also referred to as a bubble soap film coating (bSFC). bSFC may be easy to implement in an industrial setting since new bubbles could continuously be regenerated if they burst.

A foam refers to a two-phase system comprising gas cells enclosed by thin liquid films, i.e. a dispersion of a gas within a liquid. The foam may thus comprise several planar liquid lamellae. These thin films, or faces, are meeting in Plateau borders. Typical liquid foam consists of water mixed with surfactants. However, liquids comprising polymers and/or proteins may also be foamed, i.e. polymers and proteins may stabilize the G-L-G interfaces. Thus, this embodiment involves penetrating multiple G-L-G interfaces with the substrate to be coated, i.e. penetrating the foam with the substrate.

The foam may comprise more than a volume percent liquid, which means that the Plateau border may be a channel of finite width.

In embodiments of the first aspect the at least one gas-liquid-gas interface of step a) is a single liquid film in gas.

A method according to the present invention in which the G-L-G interface is a single film is herein also referred to as a soap film coating (SFC).

As discussed above, the method may involve penetrating a single film, such as a single aqueous film of finite thickness. The film may have a thickness of below 500 nm, such as below 250 nm, such as below 100 nm, such as below 50 nm.

As an example, the single film may be a 2-dimensional liquid film stabilized by surfactants and may e.g. have been formed in a frame. As the substrate penetrates the film, compositions that stabilizes the film, such as surfactants, proteins or surface active polymers, are transferred to the substrate. Alternatively, or as a compliment, compositions within the aqueous solution forming the thin liquid film is transferred to the substrate.

SFC is useful in laboratory and can in the simplest variant be done by hand-coating, making it a matter of minutes to set up an experiment.

In embodiments of the first aspect, the method is further comprising the step of
b) penetrating a further at least one gas-liquid-gas interface with the coated substrate such that a composition present in the further liquid and/or at the further liquid-gas interface is further coated on the substrate.

The term "further coated" comprise forming a further layer atop a previous coated layer or e.g. forming a mixed layer with the previous coated layer. Thus, step b may involve forming a multilayer structure. Alternatively, a mixed layer may be formed if the previous layer does not cover the entire area to be coated, i.e. step b) may involve increasing the degree of coating on the surface to be coated. Further, a mixed layer may be formed if the composition in step b), after it has been coated onto the coating formed in step a), is capable of mixing with the coating on the substrate from step a).

Thus, the further at least one gas-liquid-gas interface may be a different interface compared to the interface of step a). The further at least one gas-liquid-gas interface of step b) may be at least one interface of the same sort as in step a). It is also be understood that the further liquid of step b) may be another or a different liquid than the liquid of step a). Consequently, step b) may involve coating the substrate with a second coating. This second coating may be a different coating compared to the coating formed after step a). Further, the second coating may be formed on another part of the substrate compared to the coating from step a) or it may be formed as a coating atop the coating formed in step a).

The method may further comprise at least one further step after step b):
repeating step b) using the coated substrate.

It is to be understood that the method may comprise several coating steps x, e.g. expressed as steps bxₙ:
bxₙ) penetrating a further at least one gas-aqueous solution-gas interface with the coated substrate of step bxₙ₋₁ such that a composition present in the further aqueous solution and/or at the aqueous solution-gas interface is further coated on the substrate. Step bxₙ may be repeated n times and n is from 2 to about 10. The further at least one gas-liquid-gas interface may comprise different compositions in different steps bxₙ.

Thus, if for example four additional layers are to be coated, the method may comprise the steps
b) penetrating a further at least one gas-aqueous solution-gas interface with the coated substrate of step a) such that a composition present in the further aqueous solution and/or at the aqueous solution-gas interface is further coated on the substrate,
b1) penetrating a further at least one gas-aqueous solution-gas interface with the coated substrate of step b) such that a composition present in the further aqueous solution and/or at the aqueous solution-gas interface is further coated on the substrate,
b2) penetrating a further at least one gas-aqueous solution-gas interface with the coated substrate of step b1) such that a composition present in the further aqueous solution and/or at the aqueous solution-gas interface is further coated on the substrate
b3) penetrating a further at least one gas-aqueous solution-gas interface with the coated substrate of step b2) such that a composition present in the further aqueous solution and/or at the aqueous solution-gas interface is further coated on the substrate,
wherein the composition of steps b-b4 may be the same or different.

In embodiments, the step b is repeated 3, 4, 5, 6 , 7, 8, 9 or 10 times such that a multilayer comprising 3, 4, 5, 6 , 7, 8, 9 or 10 layers is formed.

The capability of forming complex coating structures, i.e. several layers in a multilayer structure in which one or several layers are in the nanometer range. This may thus provide for coating of complex layer structures in applications such as solar cells or electrochromic coatings.

In embodiments of the first aspect, the method is further comprising the step of
c) evaporating liquid from the coating of the coated surface.

Step c) thus refers to decreasing the amount of liquid in the formed coating. This may for example be achieved by increasing the temperature.

In embodiments of the first aspect, the method is further comprising the step of
d) sintering the coated surface.

Step d) may be performed before or after step c).

The sintering may be advantageous if for example particles or sheets are coated on the substrate, and it may help to stabilize the coated layers.

The sintering may be performed in an oven. The sintering may be a flash sintering, in which electromagnetic pulses heats the coated composition using flashlights or microwaves of high power.

The sintering may be performed by means of infrared heating, flash sintering and/or microwave radiation.

In embodiments of the first aspect of the invention, the substrate is penetrated at a speed of at least 10 cm/s, such as at least 50 cm/s, such at least 1 m/s, such as at least 2 m/s, such as about 5 m/s.

Thus, the present invention provides for high-speed coating of nanometer thick layers. Such speeds are typically the speeds in a large-scale roll-to-roll coater, which means that the present invention may be applied in a roll-to-roll coater.

In embodiments of the first aspect of the invention, the composition comprises at least one surfactant, surface active polymer and/or protein.

If the composition comprises at least one surfactant, surface active polymer and/or protein, the at least one surfactant, surface active polymer and/or protein may be present at the gas-liquid interface. However, the at least one surfactant, surface active polymer and/or protein may also be present in the liquid forming the gas-liquid-gas interface.

Further, the surfactants may for example be anionic surfactants, such as SDS (sodium dodecyl sulfate), SLS (sodium lauryl sulfate) and/or SMS (sodium myreth sulfate). Cationic surfactans that may be used include Benzalkonium chloride, Dioctadecyldimethylammonium bromide (DOTAB) and/or Dioctadecyldimethylammonium chloride (DOTAC). Further, non-ionic surfactants may be used, such as tetraoxyethylene glycol monooctyl ether, and also zwitterionic surfactants such as lecithin.

The protein may for example be ferritin. Other examples include antibodies, streptavidin and aptamers.

Moreover, the composition further comprises at least one additional component dissolved in the liquid.

The additional component may for example be a protein as discussed above or a small organic molecule, such as a fluorophore. The additional component may also comprise DNA.

Consequently, the present embodiment involve a coating composition comprising a surface active molecule, such as a surfactant, surface active polymer and/or protein, at the gas-liquid interface, and an additional component, such as a component dissolved in the liquid, such as a protein and/or organic molecule. Upon coating, both the surface active molecule and the component dissolve in the liquid is transferred to the surface.

For example, the composition may further comprise a colloid. The colloid may be dispersed in the liquid. The dispersion of colloids may be stabilized with appropriate surfactants.

The colloid may for example comprise nanoparticles. The nanoparticles may be selected from SiO₂, Au, ITO, TiO2 and polystyrene.

The colloid may for example comprise nanowires. The nanowires may be selected from nanotubes, nanocrystalline cellulose and ZnO.

The colloid may for example comprise nanosheets. The nanosheets may comprise clay, grapheme, grapheme oxide and/or graphite. Thus, a layered material may be formed on the substrate upon coating.

In embodiments of the first aspect, the substrate is a planar surface.

The planar surface may be a plastic surface or a metal surface. For example the planar surface may be glass, semiconductor wafers, paper including coated paper, plastic films including coated plastic films, building elements including windows, surfaces for digital displays.

Furthermore, the substrate may be a non-planar surface. As an example , the surface may be cylindrical, such as optical fibers, textile fibers, cables, bottles of glass or plastic, cans of metal or plastic

Consequently, the planar surface may be a paper surface.

The substrate, such as the planar surface, may be a few centimetres to several meters wide, such as about 10 meters wide. In the penetration step of a), the whole width of the substrate may penetrate the at least one gas-liquid-gas interface.

Moreover, the length of the substrate may further have a length of at least 1 m, such as at least 5 m, such as at least 20 m, such as at least 50 m, such as at least 100 m, such as at least 500 m, such as at least 1000 m, such as at least 5000 m. Thus, the method allows for coating of nanometer thin layers in large scale. The method may thus be applicable in roll-to-roll coating systems.

The thickness of a formed coating of step a) or the further coating of step b), may be below 500 nm, such as below, 300 nm, such as below 200 nm, such as below 100 nm, such as below 50 nm, such as below 20 nm, such as below 10 nm.

If several layers are coated, i.e. if step b) is performed one or several times, the total thickness of the formed coating (i.e. all coating layers) may be at least 100 nm, such as at least 200 nm, such as at least 500 nm, such as at least 1 µm, such as at least 5 µm, such as at least 10 µm, such as at least 50 µm.

As a second aspect of the invention, there is provided a coated substrate, wherein the coating has been applied according to the method according to the first aspect of the invention.

As a third aspect of the invention, there is provided a coating system for coating a substrate comprising
- a sample holder for holding a substrate to be coated;
- a container for holding at least one gas-liquid-gas interface;
- means for moving the sample holder such that a substrate held by the sample holder penetrates at least one gas-liquid-gas interface held by the container.

The sample holder may for example be a clip or any suitable means for suspending a planar surface in the air.

The means for moving may be electrical means or for example means that are controlled by compressed air, such as a compressed air controlled pneumatic cylinder.

The container for holding the at least one gas-liquid-gas interface may be a frame, such as a prism frame. The frame may comprise nylon.

The terms and definitions used in the third aspect of the invention are as defined in connection with the other aspects of the invention hereinabove The coating system may for example be a roll-to-roll coating system.

A roll-to-roll system is advantageous in that it allows for coating at high speed, such at a speed of several tens of m/s.

Then, the sample holder may be a roll for holding the substrate. The substrate may thus be rolled upon the roll. The means for moving the sample holder may be means for rolling the roll holding the substrate such that the substrate is unrolled from the roll and into the container holding at least one gas-liquid-gas interface, such as a foam.

In a roll-to-roll system, the container or containers for holding at least one gas-liquid-gas interface are located downstream from the first roll.

The coating system may further comprise a second sample holder for holding the coated substrate.

In a roll-to-roll coating system, the second sample holder may be a second roll upon which the coated substrate, after passing at least one container holding at least one gas-liquid-gas interface, may be gathered upon, i.e. the coated substrate may rolled up on the second roll. The system may thus comprise means for rolling the second roll such that the coated substrate is rolled up on the second roll.

If the coating system is a roll-to-roll coater, the means for moving the sample holder may be means for rolling the rolls at high speed, e.g. such that the substrate rolled up on the rolls move at a speed of least 10 cm/s, such as at least 50 cm/s, such at least 1 m/s, such as at least 2 m/s, such as about 5 m/s.

The second sample holder may be provided downstream from the other equipment in the system.

In embodiments of the third aspect of the invention, the system is comprising at least one further container for holding at least one further gas-liquid-gas interface.

The further container or containers thus provides for coating further layers on the substrate, as discussed in relation to the first aspect above.

In a roll-to-roll system, the at least one further container may be provided between the first container and a second sample holder, i.e. upstream from the second sample holder but downstream from the first substrate holder.

In embodiments of the third aspect of the invention, the system is further comprising a reservoir connected to the container for holding a liquid capable of forming at least one gas-liquid-gas interface in the container or containers.

The reservoir may for example be a closed reservoir of a suitable material. It may be connected, e.g. by means of tubings, to one or several containers for holding the at least one gas-liquid.gas interface, such that liquid or foamed liquid may be transported to the container or containers. Liquid or foamed liquid may also be transported by e.g. a control wire, such as a control wire made of nylon, as discussed in Example 2 below.

The system may further comprise a gas reservoir and means for blowing gas from the gas reservoir into the reservoir for holding the liquid, thereby forming a foam or liquid film held by the container.

The gas reservoir and the means for blowing gas may be adapted to continuously blow gas such that a foam or liquid film held by the container or containers is continuously formed during the coating process. This is advantageous since the foam or film may break as the substrate penetrates the foam or film, i.e. fresh foam or film may continuously need to be formed if for example the whole substrate is forced through the foam or film in order to coat the whole length of a substrate. This may be the case in a roll-to-roll coating system, in which for example substrates or surface that may have a length of several meters or kilometres, passes through a foam or film.

In embodiments of the third aspect, means for holding at least one gas-liquid-gas interface is a frame for holding a single liquid film. The film may thus be formed within the frame.

The system may for example further comprise at least one optical system for controlling the thickness of the coated film. The optical system may be adapted to continuously monitor the thickness of the

The optical system may for example be an ellipsometer or reflectometer. In a roll-to-roll coating system, the optical system may be provided downstream from a container holding a film or foam, such that the thickness of the freshly coated film is monitored.

As a fourth aspect of the invention, there is provided a dye-sensitized solar cell (DSSC) having a multilayer structure, wherein at least one of the layers have been prepared using the method as described above.

A dye-sensitized solar cell (DSSC, DSC or DYSC) refers to solar cell thin film solar cells. A DSSC may be based on a semiconductor formed between a photo-sensitized anode and an electrolyte. As an example a dye-sensitized solar cell (DSSC) may comprise five layers divided into two electrodes consisting of fluorine-doped tin oxide (FTO)/Au/TiO₂ and graphite/FTO.

### Brief description of the drawings

Figure 1a and 1b show a schematic drawing of the coating process using a single soap-film filled with nanoparticles. The particles are contained within the soap-particle film, and when a substrate is pushed through the film a particle film will be coated on the substrate. Figure 1c shows a single soap film and illustrates how a substrates penetrates the film. Figure 1d shows a foam and illustrates how a substrate penetrates the foam.
Figure 2 shows a schematic drawing of a roll-to-roll coater that may be used in a large-scale soap film or bubbles soap film coating process.

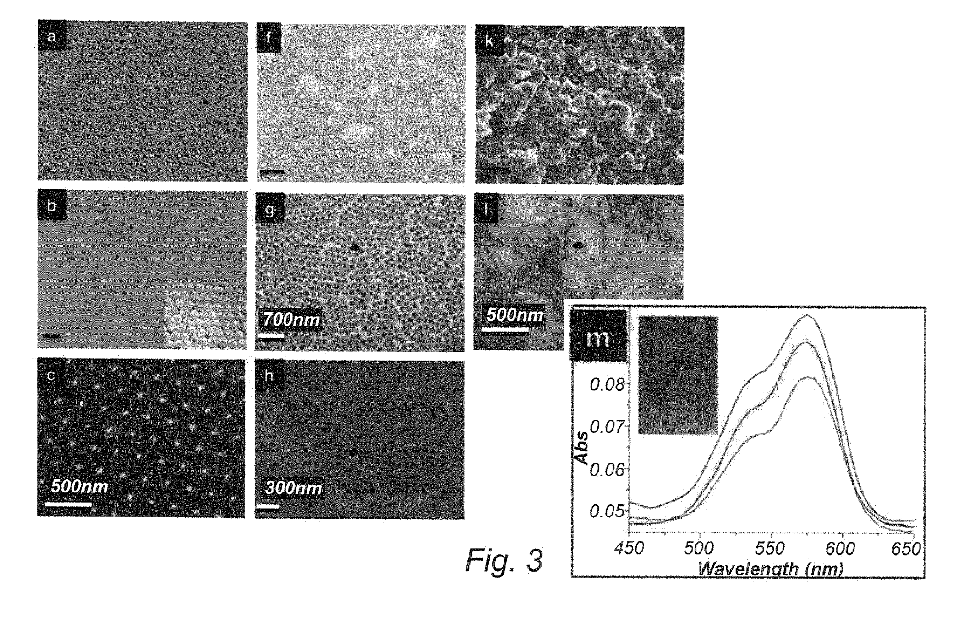

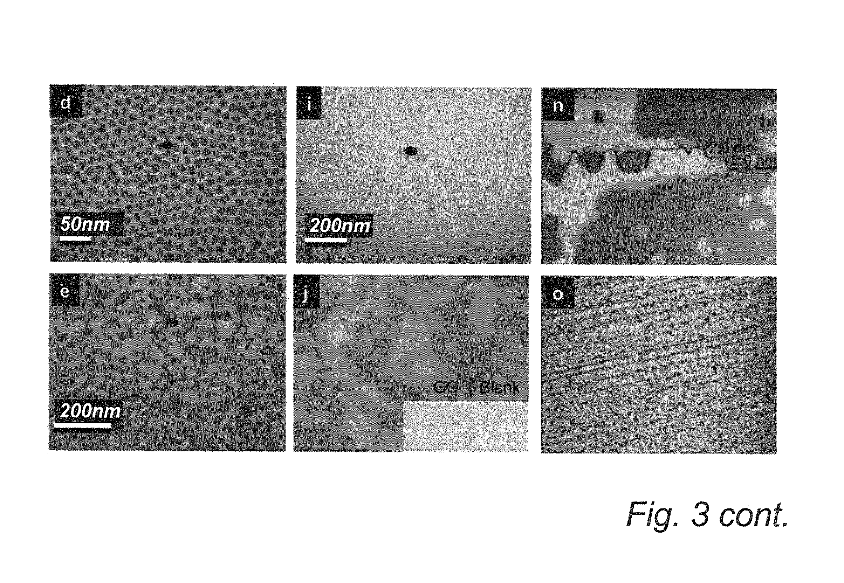

Figure 3 shows a summary of soap film coating of nanoparticles, sheets, wires, and molecules. **a-e,** Inorganic nanoparticles. **a-c,** SFC coated silica films with silica concentration of 1.0%, 2.1% and 2.9%. **a**, scanning electron microscope (SEM) image of a sub-monolayer 240 nm silica nanoparticle (scale bar 2 µm). **b**, SEM image of a monolayer of 240 nm silica nanoparticles (scale bar 2 µm, the inset shows a image at higher magnification). **c**, transmission electron microscope (TEM) image of a double layer silica nanoparticles. **d**, TEM of monolayer gold nanoparticles. **e**, TEM of single layer TiO₂ nanoparticles. **f-j**, Organic and bio-organic nanoparticles. **f-h**, SFC coated polystyrene nanoparticles. **f**, sub-monolayer polystyrene (scale bar 2 µm), **g,** monolayer of polystyrene. **h**, triple-layer of polystyrene. **i**, TEM of a monolayer of Ferritin. **j-o**, coated nano sheets, nano wires, and molecules. **j**, atomic force microscope (AFM) image of <1.5 layer GO film (3 µm x 2 µm). The insert shows a photo of the coated layer after annealing at 240°C for 2 min. **k,** SEM of clay on glass (scale bar 2 µm). **l,** SFC coated nanocellulose, **m**, UV-Vis and a photo of Rhodamine B on a glass slide. **n** and **o,** small (2 µm x 1.5 µm) and large scale (20 µm x 15 µm) AFM images of SDS sub-double layer.

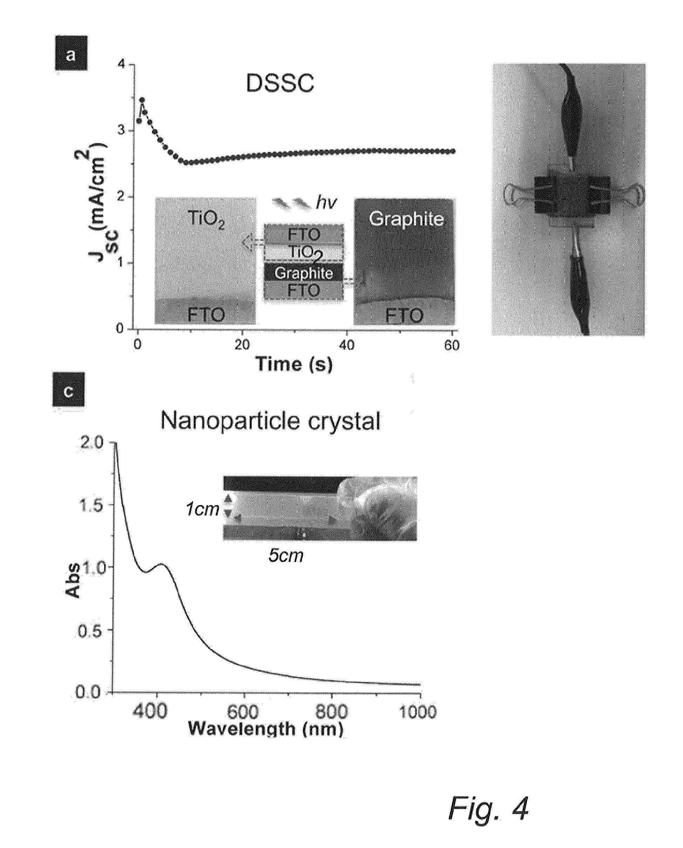

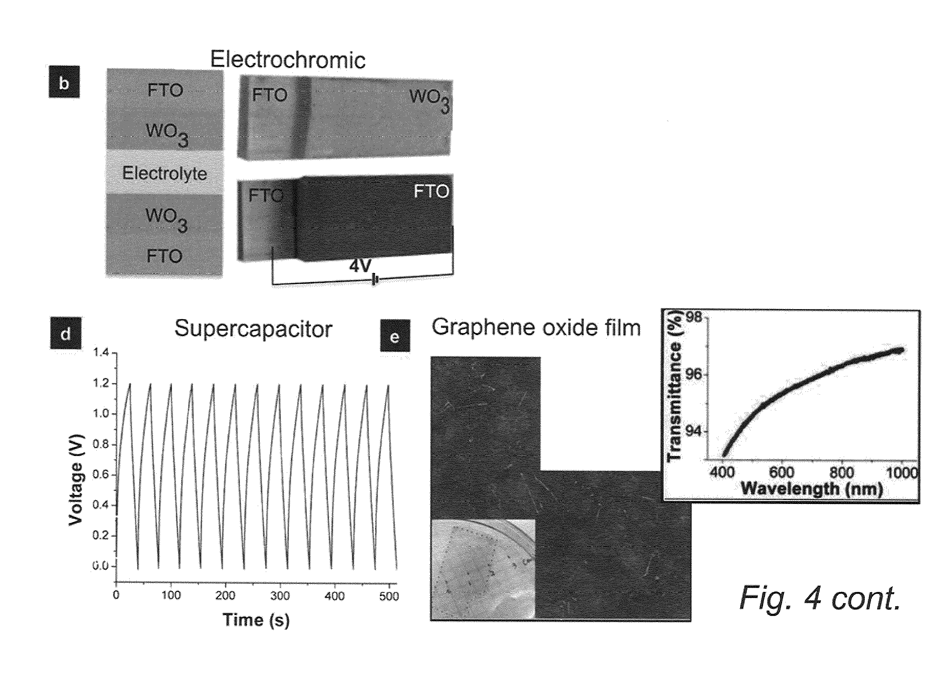

Figure 4 shows examples soap film coating multilayers. **a**, SFC coated dye sensitized solar cell (DSSC). The graph shows the initial current density when subjected to light. A maximum of 540 mV and 12 mA was detected under a 250 W projector lamp. The energy conversion rate was ∼2.8 % at a cell area of 0.38 cm² and ∼0.9 % at 3.04 cm². The insert shows the TiO₂, graphite coated FTO glass, and the structure of the DSSC. The photo shows the assembled DSSC. **b**, The structure of the electrochromic device and the colour of the WO₃ film before and after adding 4 V bias on the FTO electrodes. **c**, Nanoparticle crystal of 240 nm silica nanoparticles on glass slide (10 coating cycles, 14 wt% particles, 8 cm/s), showing an absorbance at 405 nm. The insert shows a photo of this crystal with a light blue reflection colour. **d**, Charge and discharge curves of supercapacitor made from SFC coated 50 nm thick GO films, where the GO films were coated on two silver foil electrodes and annealed at 400°C. **e**, Free floating graphene oxide (GO) film coated with the SFC method. The 5 µm x 5 µm AFM image shows a 2.6 nm thick GO film, which was the thinnest film that can be separated from substrate without film rupture. The photo (inset bottom left) shows the 2.6 nm thick GO film floating on the surface of an ammonia solution after annealed at 240°C and separated from a silicon wafer. The film had a 95% transmittance at 550 nm (inset top right).
Figure 5 shows a laboratory soap film coating set-up.
Figure 6 shows film thickness and optical absorption of coated silica nanoparticles (A) and methyl blue (B), respectively.
Figure 7 shows the transmittance of thin GO film (<1.5 layer). The figure shows the transmittance of GO before and after annealing at 240°C.
Figure 8 shows images coated substrates. Fig. 8a is a TEM image of SFC coated WOₛ nanoparticles. The WO₃ nanoparticles was coated on copper grid for imaging. Fig. 8b is a High magnification TEM image of SFC coated ferritin. Image shows a monolayer of ferritin using copper grid as the substrate. Fig. 8c. is a low magnification of SFC coated nanocellulose on copper grid. The nanocellulose was coated on copper grid for imaging.
Figure 9 shows silica films coated at different coating speed. a) 2.3 m/s, b) 1.2 m/s, c) 0.77 m/s, and d) 0.52 m/s. Silica concentration: 11%. The scale bar are 2 µm in all SEM images.
Figure 10 shows further silica film coated at different concentration. a) 0.5%, b) 1.0 %, c) 2.1%, and d) 5%. Coating speed: 8 cm/s.
Figure 11 shows a comparison of the coating effect of doctor blade and SFC. **a** SEM of doctor blade coated clay on paper. **b** SEM of SFC coated clay on paper.
Figure 12 shows SEM images of multilayer polystyrene films. **a**, A triple layer of polystyrene. **b**, Multilayer of polystyrene nanoparticles.
Figure 13 shows alternating layer coating of silica nanoparticle and ferritin. Silica particles was first coated at 8 cm/s with concentration of 2.1%. Then ferritin was then coated at a speed of 8 cm/s and a concentration of 1.0 %.
Figure 14 shows SFC coated mixing silica nanoparticles. Large silica nanoparticles were first coated, followed by coating of the smaller ones. The image shows the result of two coating cycles.
Figure 15 shows resistance changes of a 2.6 nm 240°C annealed GO film. The figure shows the resistance change at different bending angles, showing a less than 5% resistance change. The resistance did not show any obvious difference between three different tests, indicating a reversible behaviour.
Figure 16 shows a laser sintered ITO film. Figure shows the transmittance of the sintered film, and a photo of a 2.5 x 2.5 cm2 sintered film.
Figure 17 shows a tutorial of simple soap film hand-coating. A suspension of coating materials, water and surfactant needs to be prepared first. Then, make a frame from a metal wire, plastic plates, etc. To make a single soap film on the frame, just dip the frame into the suspension and lift up carefully. Then, coat a substrate by penetrating it through the soap film.

### Examples

The following non-limiting examples will further illustrate the present invention.

### Example 1. General description of coating process

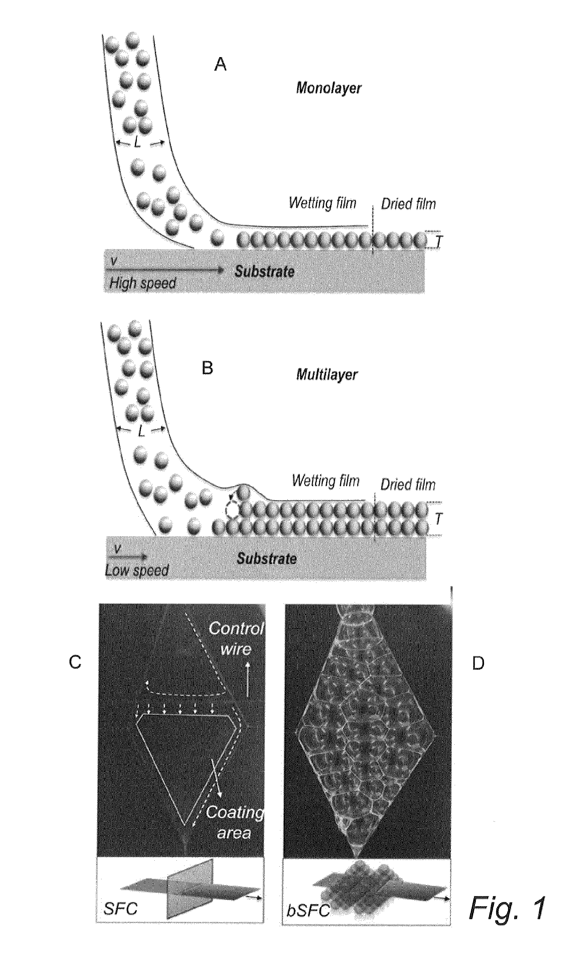

A schematic drawing of the coating process is seen in Fig. 1. In Fig. 1A, a monolayer of nanoparticles is coated onto the substrate as the substrate penetrates a soap film. In Fig. 1B, a multilayer of nanoparticles are coated onto the substrate. Fig. 1C further illustrates an example in which the substrate is forced through a single film. This embodiment is herein also referred to soap film coating (SFC). Fig. 1D further illustrates an example in which the substrate penetrates a foam, herein also referred to as bubble soap film coating (bSFC). During the deposition, the soap film may be transferred onto the substrate and the water may subsequently evaporate from the surface. The single film and the foam is contained within a frame made from nylon wires. The white dash arrows in the single film show the liquid flow in the film when a control wire was added. The control wire was added to increase the lifetime of the film since it may offer continuous refilling of liquid to the coating area.

The inventors have found that the thickness of the deposited films may be related to the coating speed, such as proportional to *v*^{-0.7}*,* where *v ^{v}*is the penetration speed for particles as well as dye molecules. Consequently, the speed at which the substrate penetrates the G-L-G interface is higher in Fig. 1A compared to the situation in Fig. 1B. The coating speed in the performed experiments (explained more in detail below) was from cm/s to several m/s. Practical issues may set the upper speed limit of SFC since high coating rates may lead to the formation of a too thin film. The bSFC method may normally produce thicker films than SFC since several bubbles will be penetrated when a foam is used.

### Example 2. Different coating systems

### a) Roll-to-roll coater for large-scale soap film coating process

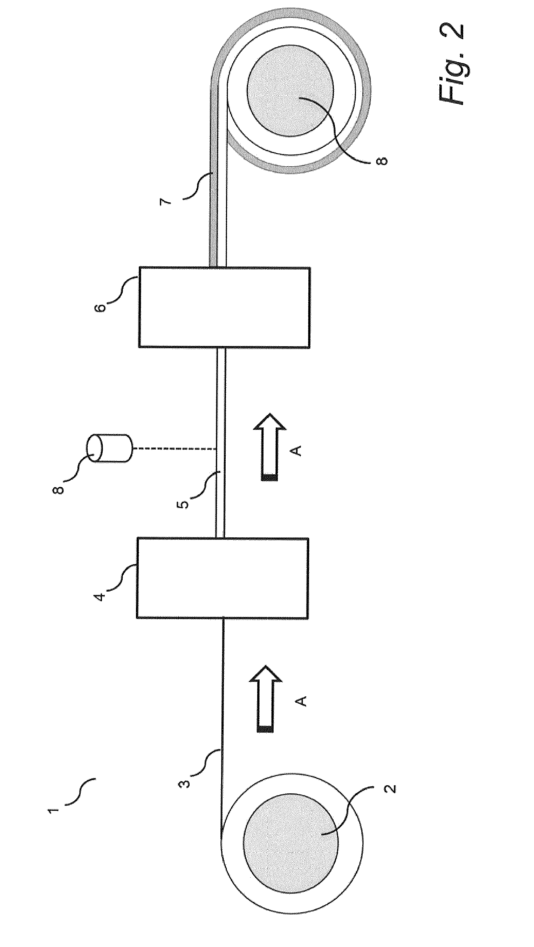

Fig. 2 shows a schematic drawing of a roll-to-roll coater 1 for a large-scale soap film coating process. The substrate to be coated 3, e.g. a paper substrate, is provided on a first roll 2. Upon rolling of the first roll 2, the substrate 3 moves in the direction as indicated by arrows A through a first container 4 holding a first foam or film that is coated onto the substrate 3. Downstream from the first container 4, there are provided means 8 for measuring the thickness of the coating 5 on the substrate 3. The means for measuring the thickness may for example be an ellipsometer or other optical means for measuring a film thickness on a surface. Downstream from the first container 4 is a second container 6 for holding a second foam or film that is coated onto the substrate 3, thereby forming an additional layer 7 on top of the first coated layer 5. The system may include several containers holding films or foams such that several layers (multilayers) may be coated onto the substrate 3. For simplicity, only two containers are shown in Fig. 2. After being coated, the substrate 3 is rolled up onto a second roll 8, which conveniently gathers all of the coated substrate. Further, there may be means (not shown) for e.g. sintering the coated layers before the substrate is rolled up onto the second roll 8. Such sintering means may be provided downstream from one or each of the containers for holding the films or foams.

### b) Soap film coating set-up

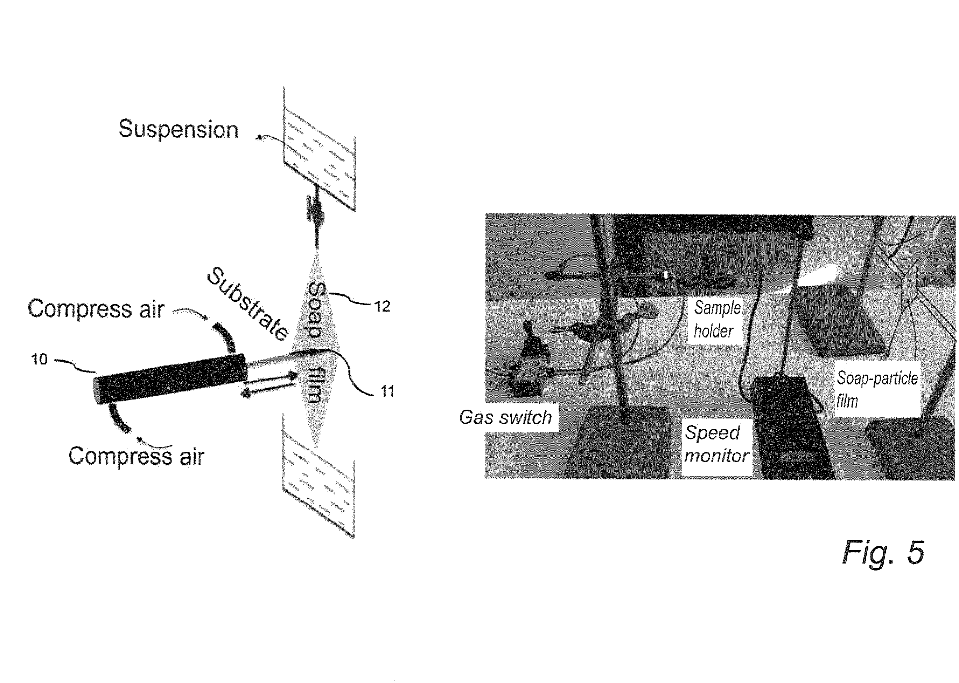

A laboratory system or set-up for performing coating according to the present disclosure is seen in Fig. 5. The system includes a compressed air controlled pneumatic cylinder 10, a clip for sample holding 11, a prism frame made of nylon lines 12 to hold soap film or foam.

A substrate is fixed on a sample holder 11, which can be moved forward or backward by controlling the compressed air at the two terminals of the cylinder. A speed monitor is placed between the sample holder and the soap-particle film to detect the speed of the moving substrate. The soap-particle film is held by a frame made from nylon wires, which is hanging in front of the sample holder. A "control wire" is place on the soap film to increase the lifetime of the film. Above the frame, there is a funnel filled with suspensions that refill the soap-particle film continuously, as shown in the schematic drawing of Fig. 5.

The coating speed may be controlled by changing the compressed air pressure to the cylinder giving a speed range from cm/s to several m/s. A gas switch was used to change the direction of the piston. To reach the lowest speed we used two additional valves to further reduce the pressure.

To create a single soap film, one can move a stick (we used an iron wire) parallel to the frame from the top of the frame and move it down while having a suspension flow. To increase the stability of the film, a nylon "control wire" was added after the film was created. The control wire was placed parallel to the table in the middle of the frame. The control wire guides the flow of the suspension into the area below the control wire, which was the effective area for penetration of the soap film by the substrate. This control wire guided a refill of the effective area continuously so not to break the soap film due to the consumption during coating or due to evaporation during coating. To create a bubble soap film, a single soap film was first made, and then air was injected at a valve on the funnel, resulting in bubbles. The bubbles could then flow down and be held by the frame. When the bubble soap film was established, the substrate was coated by penetrating through the bubble films. For high speed deposition (m/s) the resulting film may be thin and the water may evaporate quickly, however, when coating at lower speeds (cm/s) the thicker film will contain more water. Nitrogen gas was sometimes used to blow dry the film.

### Example 3. Summary of foam coating processes/experiments

Different types of materials were tested to show the advantages of soap film coating (SFC A summary of the performed experiments are seen in Fig. 3.

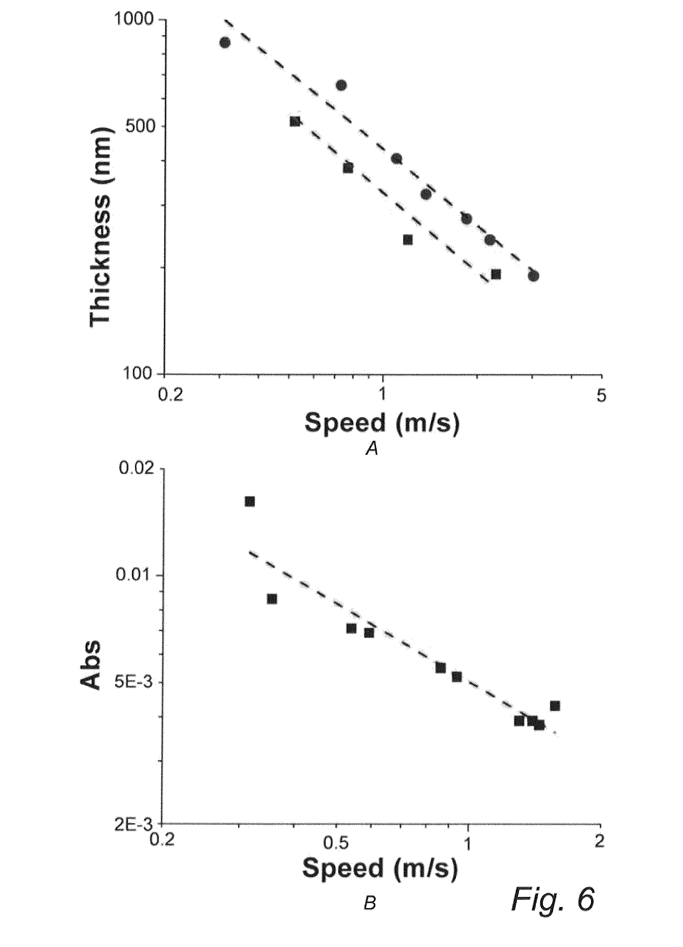

Materials in the form of nanoparticles (Fig. 3a-i), sheet-like nanomaterials (Fig. 3j, 3k), nanowires (Fig. 3l), or molecules (Fig. 3m-o), can all be deposited. The shape of the material was not a limiting factor of the SFC method, however, the shape influenced the structure of the final film as was found with the highly ordered packing of spherical nanoparticles for a number of materials such as silica (Fig. 3a-c), gold (Fig. 3d), and polystyrene (Fig. 3f-h). These nanoparticle crystals were deposited at a relatively low speed of 8 cm/s, but by increasing the particle concentration a crystal still formed, for example, silica nanoparticles at a concentration of 11% gave an ordered monolayer at 1.2 m/s. Single- or multilayers of irregular particles, e.g. TiO₂ (Fig. 3e) did not show any order but for irregular sheet-like materials there was still an ordering as the sheets were preferentially ordered along the surface direction (Fig. 3j, 3k), a phenomenon that not necessarily is the case for other coating methods such as doctor blade. An interesting implication of this sheet ordering is the SFC deposition of thin graphene oxide (GO) films with an area of several square centimeters (Fig. 3j). SFC was quite independent of the material and inorganic (non-metal, metal, metal oxide, and composites), organic (polystyrene), and biological materials (ferritin, Fig. 3i) could all be coated onto substrates. Water soluble molecules were also deposited using SFC, like the dye molecules shown in Fig. 6B and Fig. 3m. Amphiphilic molecules could also be coated using SFC, as seen in the deposition of a double layer of SDS (Fig. 3n, 3o) that had a thickness of 4.0 nm.

Fig. 4 further shows examples in which multilayers were coated. The first multilayer application, a dye-sensitized solar cell (DSSC) was constructed that consisted of five layers divided into two electrodes consisting of FTO/Au/TiO₂ and graphite/FTO. Fig. 4a shows the time dependency of current density of a 3.04 cm² sized DSSC under a projector lamp with a ∼0.9% energy convention rate (∼2.8 % for a 0.38 cm² sized). A second application was an electrochromic device and Fig. 4b shows the change in colour of the SFC coated WO₃ film on a FTO glass slide when biased at 4V. A third application was nanoparticle crystals using the closed packed silica nanoparticles mentioned above (Fig. 3a-c) with an absorbance band at 404 nm and a light blue reflection colour (Fig. 4c). Yet another application is graphene based supercapacitor constructed by the two above mentioned electrodes, a filter paper as separator membrane, and KOH solution as electrolyte that resulted in a competitive capacitance of 130 F/g (Fig. 4d).

From these multilayer prototypes, sintering may be needed. Such sintering is an often needed step for final treatment of nanoparticle films, in particular when the requirements of the films include a high electrical conductivity. In both the DSSC and the electrochromic device we used such sintering steps. However, this is not necessarily a limitation for a roll-to-roll implementation of foam coating since there are today high-speed methods where sintering is done by electromagnetic radiation such as in flash sintering or by microwave radiation. We tested sintering using a laser on ITO nanoparticles films, coated by SFC on glass, resulting in a sheet resistance of 2.2 kΩ/sq.

In summary, soap film coating has been demonstrated as a general method for high-speed coating of ordered nanostructures in a laboratory setting. Thus, we believe that the simplicity and generality of soap film coating combined with the unique speed-thickness performance makes it a candidate for implementing large-scale industrial applications of nanotechnology.

### Example 5. Tutorial on simple soap film coating

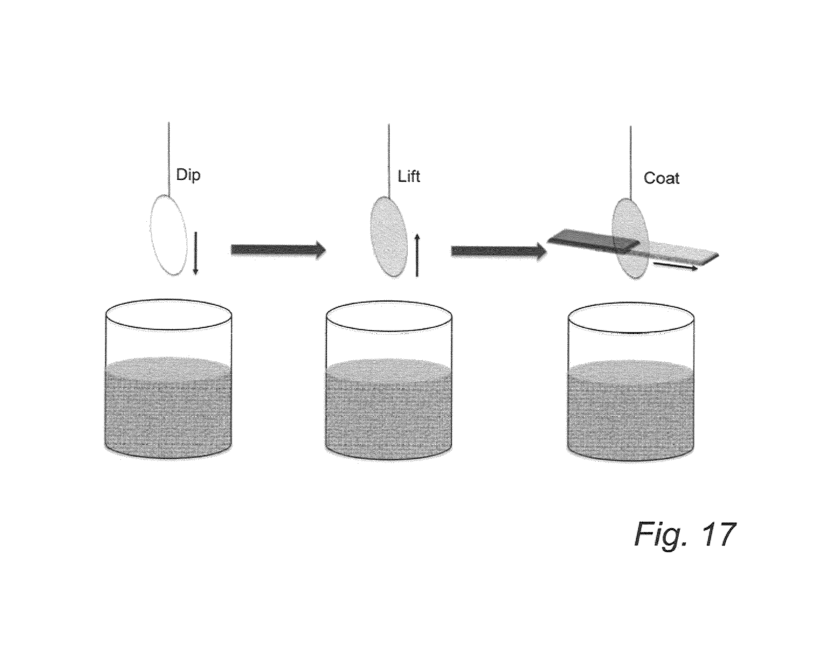

A simple hand-coating procedure of SFC can be used when no precise control of film thickness is needed. To do this one can follow this protocol, as also seen in Fig. 17:
1) Prepare a suspension of water, surfactant, and the material that is to be coated onto a substrate. The surfactant can be SDS, Sodium lauryl sulphate (SLS), DOTAB or any other surfactants that can form stable soap film.
2) Make a frame using for example an iron wire or copper wire. The size of the frame should be larger than the cross section area of the substrate that is to be coated.
3) Dip the frame into the suspension, and lift it out slowly. A thin film should be visible holding by the frame, when the frame is lifted out. Otherwise, repeat the procedure.
4) Penetrate the substrate through the soap film. If you have several substrates to coat, the next substrate may be coated at the same time after a fresh film is lifted from the suspension. The next substrate may penetrate at the same place of the film, e.g. 1 cm from the top. One can repeat the coating effect easily by doing this.
5) Dry the samples e.g. with air or nitrogen flow, or let it dry naturally.

### Experimental Examples

The following detailed experimental examples will further show the advantages of the method.

### Characterization techniques

The instruments we used for characterizations include: TEM (JEOL 2000FX), SEM (EVO 50, ZEISS), AFM (Nanoscope IIIa), UV-Vis (UV-1800, SHIMAZU), Micromanipulator 1800 (Micromanipulator), Versalaser 200 (Universal Laser Systems, Inc.) system.

### Synthesis of silica and polystyrene nanoparticles

Silica particles were synthesized using a wet chemical method. In summary, 9 ml ammonia was added in 50 ml ethanol, followed by adding 0.3 ml tetraethoxysilane (TEOS) while stirring. After the 12 hours reaction, the silica particles were collected by filtration and rinsed with ethanol and doubly distilled water. The particles was then re-dispersed in doubly distilled water.

Polystyrene particles were synthesized: First, a mixture of 25.0 ml styrene, 2ml of methacrylic acid, and 100 ml of water was heated to the boiling point. Then, 0.8 g of K₂S₂O₈ was added as the initiator 5 minutes after the boiling started. The reaction was stopped after stirring during about 1.5 hour.

### Forming a coating of silica particles

Synthesized silica particles was re-dispersed in doubly distilled water with weight concentration of 11% or 14%. Sodium dodecyl sulphate (SDS) was then added with a weight concentration of 0.6%. The silica nanoparticles were SFC coated on silicon wafers at different speed and to investigate the relation between the coating speed and the thickness of coated film. The thickness of silica nanoparticles, 11 wt% (square) and 14 wt% (circular), versus deposition speed (log-log diagram) are shown in Fig. 6a. For studying the influence on concentration, silica nanoparticle concentration of 1.0, 2.1, 2.9 and 5 wt% were used. The dash lines in Fig 6a is least-square fitted to the data and have a slope of *v^{-0.7},* where *v* is the speed of the substrate through the soap film.

### Forming a coating of polystyrene nanoparticles

To coat polystyrene nanoparticles, we just used the suspension after the reaction without adding any surfactant. The reason is that the reaction produced some by-products that can serve as surfactant. The coating procedure was the sample as for the silica nanoparticles above. Coating speed was 8 cm/s.

### Forming a coating of graphene oxide (GO) film

We used a concentration of 0.17 wt% of graphene oxide (GO) and SFC coated thin GO films on silicon wafers or glass slides. The coated wet films on substrate were gently dried by nitrogen gas. The coated substrates were then heated to 240°C for 2 min, where the colour of coated film on glass slide changed from transparent to light gray. UV-Vis, AFM and electric measurements were performed to characterize the coated film. The coating speed was 8 cm/s.

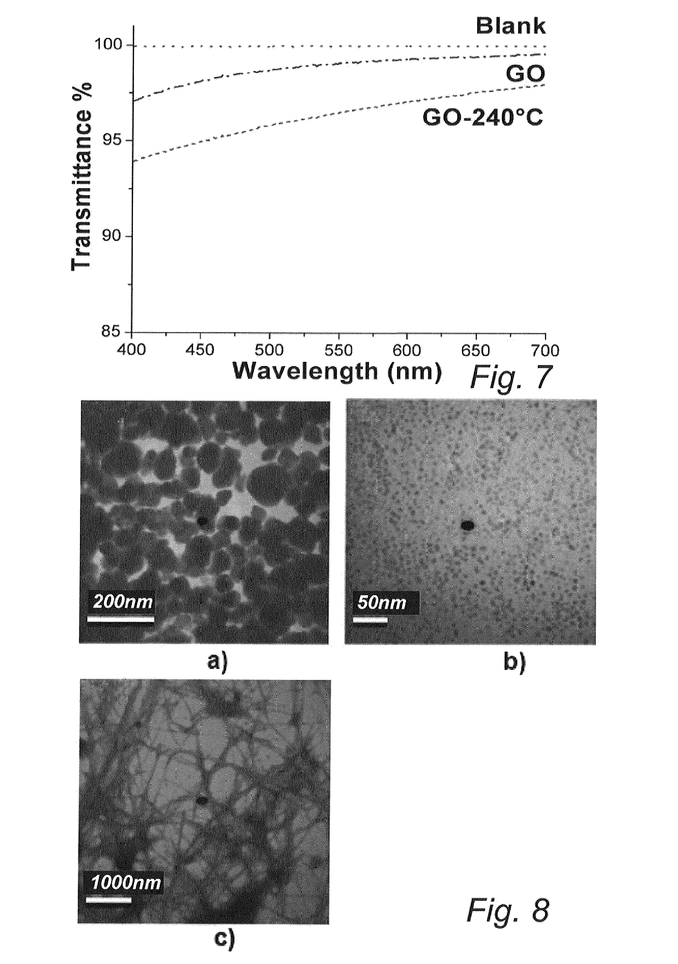

The transmittance of the coated GO at 550 nm was 98.5%, and it was 96% after annealed at 240°C (Fig. 7). This transmittance indicated a coating layer less than two layers. By increase the number of coating cycles, thicker films were produced.

To make a 2.6 nm thick free floating GO film, we a coated silicon wafer with two cycles at a concentration of 0.17 wt%. The film was then heated to 240°C the change the colour of GO to gray. To do further experiments and characterization the GO was separated from the silicon wafer by floating on an ammonia surface.

To produce electrodes for a supercapacitor study, we used a concentration of 0.3 wt% to SFC coat thick GO films on silver foils. Using 10 coating cycles at a speed of 8 cm/s generated 50 nm thick films. The coated films were then annealed at 400°C for 10 min to reduce the GO.

### Forming a coating of TiO2 nanoparticles

TiO₂ nanoparticles (Sigma-Aldrich) with an average diameter of 20 nm were dispersed in doubly distilled water with weight concentration of 3 wt% or 17 wt%. The lower concentration was used to coat single layer nanoparticles on a carbon coated copper grid that was used for TEM imaging, and the higher concentration was used to coat fluorine-doped tin oxide (FTO) glass to produce dye sensitive solar cell (DSSC).

A mixture of SDS (0.3 wt%) and dodecyltrimethylammonium bromide (DOTAB) (0.3 wt%) was used to make a well dispersed TiO₂ suspension, in order to decrease the risk of aggregates of TiO₂ nanoparticles appearing in the coated films. We used a speed of 8 cm/s for coating TiO₂ nanoparticles.

### Forming a coating of WO₃ nanoparticles

WO₃ nanoparticles with an average size < 100 nm were purchased from Sigma-Aldrich. A suspension of 20 wt% WO₃ nanoparticles was made using a mixture of SDS (0.3 wt%) and DOTAB (0.3 wt%) for performing SFC coating. To make electrochromic electrodes, we coated WO₃ nanoparticles on a FTO glass using 4 cycles at a speed of 8 cm/s. For TEM imaging WO₃ nanoparticles, we coated the WO₃ on copper grid at a concentration of 5 wt% (Fig. 8a).

### Forming a coating of Ferritin

Ferritin was used due to good contrast in TEM without staining (Fig, 8b). Proteins can be foamed without adding surfactant and we tried both without surfactant and with SDS 0.1 wt%. When using SDS in the solution the stability of the bubbles increased. The coating was done on TEM copper grids. When the bubbles were formed, we penetrated the grid through the bubble, or just attached a grid to the bubble and break the bubble with a needle. No obvious difference was found in TEM imaging between the samples that were coated with or without extra SDS.

### Forming a coating of cellulose

The weight concentration of nanocellulose used for coating was 2.8 wt%. The nanocellulose was sonicated in doubly distilled water before adding SDS, which resulted in a more dispersed suspension suitable for SFC coating. The nanocellulose was coated on copper grid for imaging (Fig. 8c).

### Forming a coating of rhodamine B and methyl blue

The weight concentrations of rhodamine B and methyl blue were 100 and 200 ppm, respectively. All films were coated on glass slides for spectroscopic measurements. Optical absorption, which is proportional to the thickness, of SFC coated methyl blue films are seen in Fig. 6b. The dash lines in Fig 6b is least-square fitted to the data and have a slope of *v^{-0.7},* where *v* is the speed of the substrate through the soap film.

### Forming a coating of SDS

Sodium dodecyl sulphate (SDS) was coated on silicon wafers at a weight concentration of 1.0 wt % with a coating speed of 8 cm/s.

### Forming a coating of clay

We coated clay on glass slides and paper with weight concentrations of 1.5 wt% for glass and 5% for paper.

### Forming a coating of gold nanoparticles

Two methods were used to make gold nanoparticles for a suitable coating solution. These two methods are much more elaborate than just mixing the particles with a SDS solution. The reason is that the concentration of gold nanoparticles are too low to get a meaningful thickness of the particles and we had to somehow increase the concentration of the particles to reach a level where a closed packed film could be formed by SFC.

Method I: The gold nanoparticles were first modified with dodecanethiol following Bigioni, T. P. et al. (Kinetically driven self assembly of highly ordered nanoparticle monolayers. Nat. Mater. 5, 265-270 (2006)), but in an aqueous solution. When gold nanoparticles were modified, they floated on the solution surface. By carefully inject of air below the floating gold nanoparticles, bubbles with gold nanoparticles in the bubble film were created on the solution surface. Gold nanoparticles were coated on copper grid by attaching the grid to the bubbles.

Method II: We placed the gold nanoparticle solution under saturate toluene gas for 7 days to generate a gold nanoparticle film on the surface, following by adding 1.0 wt % SDS. Then gold nanoparticle can be coated by penetrating a copper grid through a SFC lifted from the solution.

### Coating speed

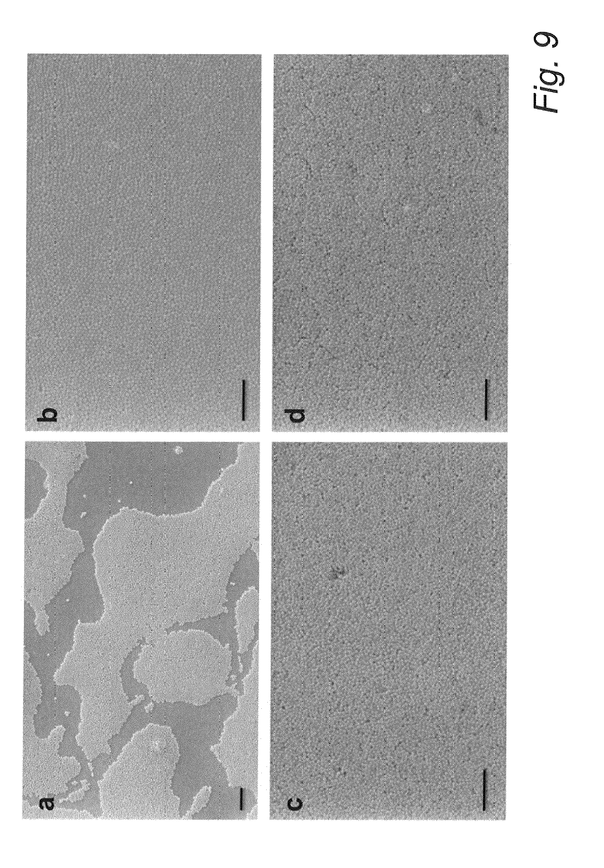

To determine the relation between coating speed and the thickness we used two different types of material, silica nanoparticles (diameter 240 nm) and methyl blue molecules. After SFC coating the thickness was measured by SEM imaging (Fig. 9 and Fig. 6a) for the nanoparticle films and by light absorption (Fig. 6b) of the methyl blue films by UV-Vis spectroscopy.

### Coating at different concentrations

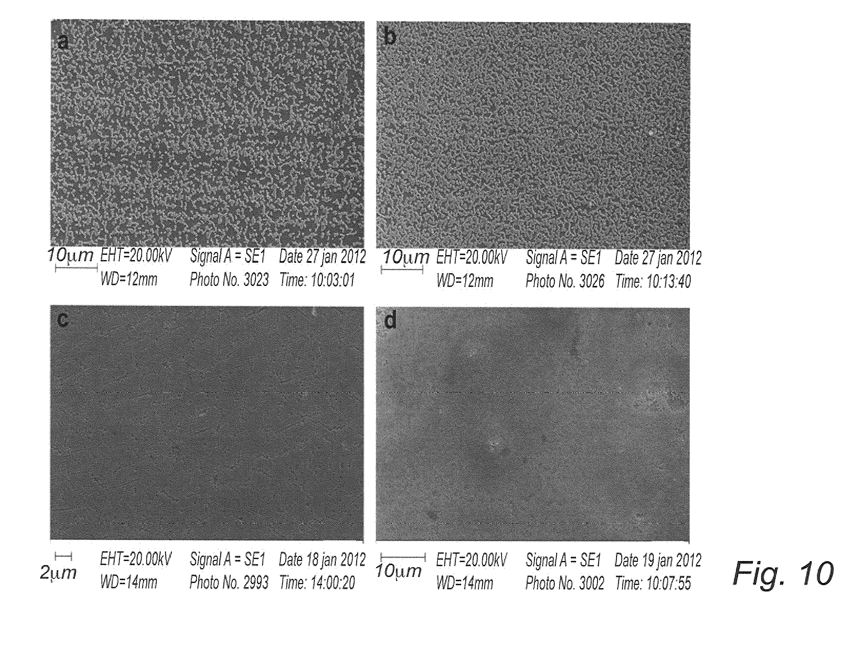

The influence of concentration on the thickness was determined by coating silica nanoparticles (Fig. 10). Sub-monolayer of silica nanoparticles (diameter 240 nm) were coated resulting in an even distribution on the wafers (Fig. 10a and 10b). This even distribution was different from the sub-monolayer coated at a higher speed and with higher concentration as shown in Fig. 9. Fig. 10c shows a large area monolayer of silica nanoparticles, however with some defects. The results indicated that the monolayer coated at low speed (Fig. 10c) has better packing structures of nanoparticles than the one coated at high speed (Fig. 10b). Fig. 10d shows a multilayer of silica nanoparticles using a coating solution with a silica concentration of 5.0 wt%.

### Comparison between soap film coating (SFC) and bubble soap film coating (bSFC)

AFM imaging showed that the surface structure of coated multilayer silica nanoparticles showed no obvious difference between SFC and bSFC. However, the thickness of bSFC coated films using a single bubble layer as shown in Fig. 1d was thicker than those coated with SFC.

### Comparison between doctor blade coating and SFC coating

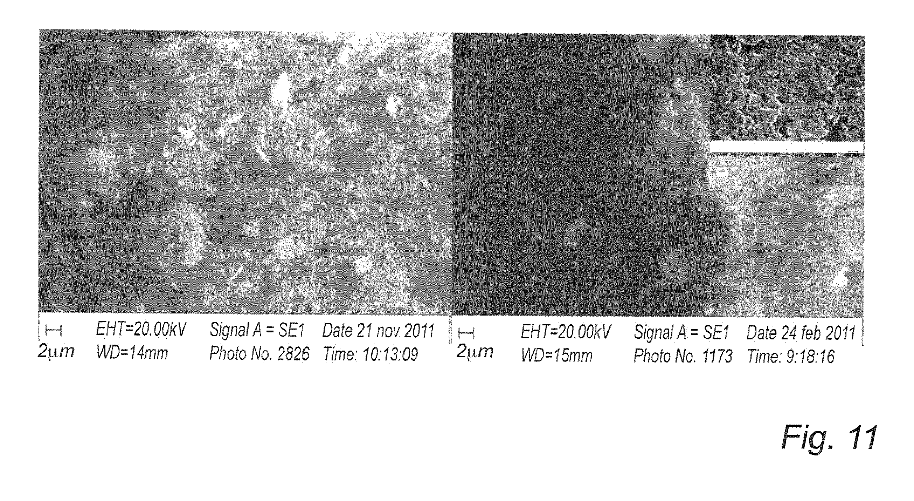

Fig. 11a shows the surface structure of clay on paper coated with doctor blade method, where we mixed water and clay, and cast it on paper using a blade. The SFC coated surface (Fig. 11b) was more smooth and with a preferential order of the layered clay particles along the surface, while the doctor blade coated surface is more rough.

### Forming a coating of multilayers

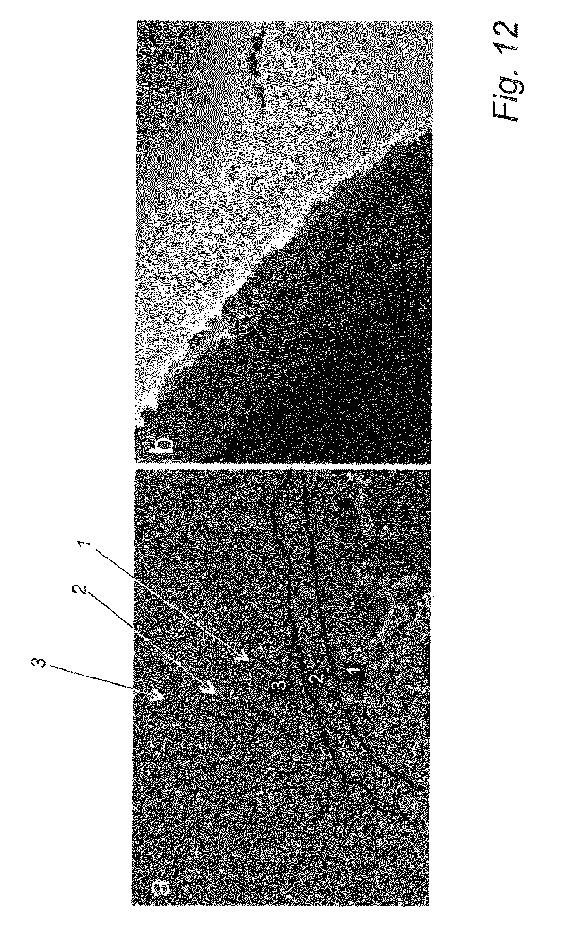

Fig. 12a shows three layers of polystyrene nanoparticles coated by a repetition of three monolayer coating processes, indicating a control of the coating layers by repeating the coating process. Fig. 12b shows a multilayer of polystyrene nanoparticles.

### Fabrication of dye sensitive solar cell (DSSC)

The DSSC were constructed by two FTO coated glass slides. One of the slides was coated with graphite (concentration: 18%), and the other one was first coated with a layer of porous gold nanofilm⁶ the and then with TiO₂ nanoparticles. The gold film was used for increasing the conductivity. The test of DSSC were performed under direct sunlight and using a 250 W projector lamp. The light intensities were measured using a LUX meter.

### Fabrication of electrochromic device

Two FTO glass slides were SFC coated using WO₃ nanoparticles (<100 nm, Sigma-Aldrich) and then simple assembled by two clips after filling the interface with a 0.5 MH₂SO₄ solution as an electrolyte. A 4 V bias was applied on the FTO glass to change the colour. The coated WO₃ films were annealed at 400 °C for 30 min before it was used.

### Supercapacitor

The supercapacitor was made by using two 400°C annealed SFC coated 50 nm GO films on silver foils as electrodes, a filter paper as a separator, and 9 M NaOH as an electrolyte. The supercapacitor was charged and discharged at 1 mA to a maximum voltage of 1.2 V. The capacitance was calculated from the discharge curve of the fifth cycle.

### Mixed size nanoparticle coatings

We also alternately coated some films with particles of two sizes. Two kinds of coatings were performed 1) silica and a protein and 2) different sized silica. In the first set of experiments, silica nanoparticles was first coated and then the protein ferritin. By repeating the procedure, an alternating silica-ferritin structure were formed. Coating speed: 8 cm/s.

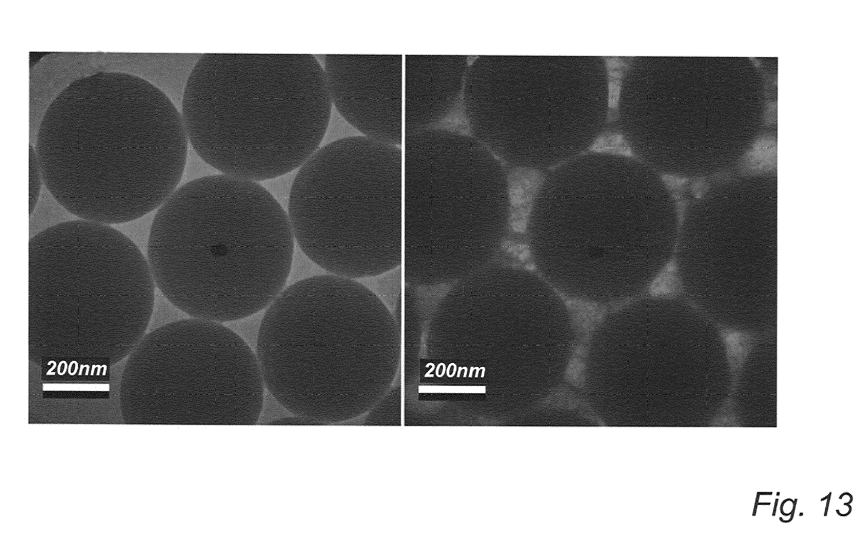

Fig. 13 shows the alternating layer of silica nanoparticles and ferritin, where an ordered silica monolayer was first coated and then covered by another layer of ferritin. The figure shows that the ferritin layer was quite even on the silica layer. Results suggest that SFC coating method could be an efficient way to construct alternating layer nanostructures.

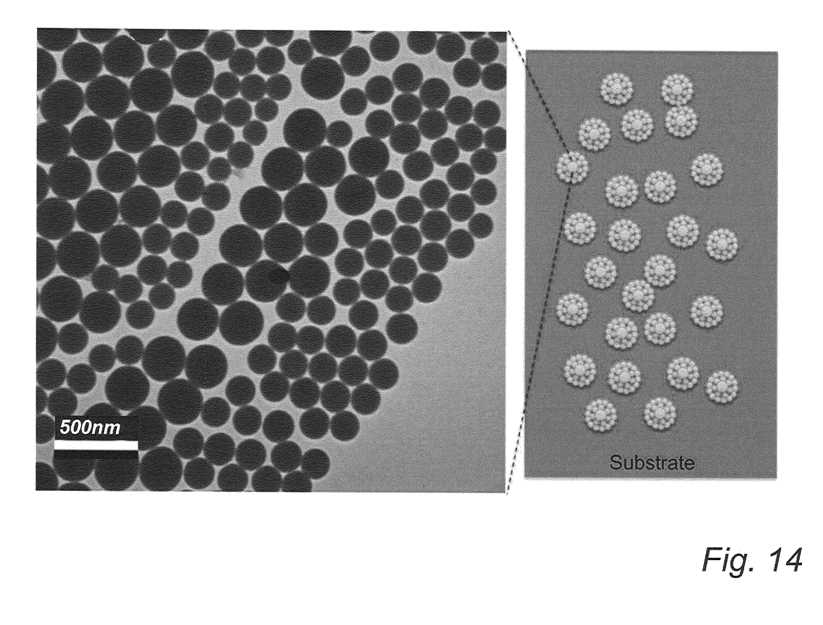

The other kind of mixed particle sized coatings were done with two different sized silica nanoparticles with a concentration of 2.1 wt%. The larger sized nanoparticles were first coated at a coating speed of 20 cm/s, then the smaller sized nanoparticle were coated at a coating speed of 30 cm/s. By repeating the procedure, a peculiar structure resulted with the different sized nanoparticles organized side-by-side (Fig. 14). If we viewed a larger area, the coated structures consisted of many small island on the wafer (see schematic in Fig. 14).

### Free floating graphene oxide film for making devices

A free floating graphene oxide (GO) film is useful since it can be transferred to other substrates for further application for example in nanoelectronics. Here, we show a simple procedure to obtain free floating GO film where the thickness of the films could were down to 2.6 nm, corresponding to a double layer of GO.

The free GO film was made by coating GO on silicon wafer and then carefully dipped the coated wafer into ammonia. This dipping separated the GO from the wafer. It should be noted that the GO film needed to be annealed first, since this process change the colour to black making it possible to see it when floating on the ammonia, otherwise, it is hard to see whether it was successfully separated or not. Fig. 4e shows free floating GO films, where the thinnest film that can be floated as a whole film was 2.6 nm. Transmittance measurement of the thermally reduced film gave a value of 95% at 550 nm (insert in Fig. 4e), indicating a double layer GO since the transmittance of individual graphene is ∼2.3% (ref. 3). I/V measurement showed a linear behaviour.

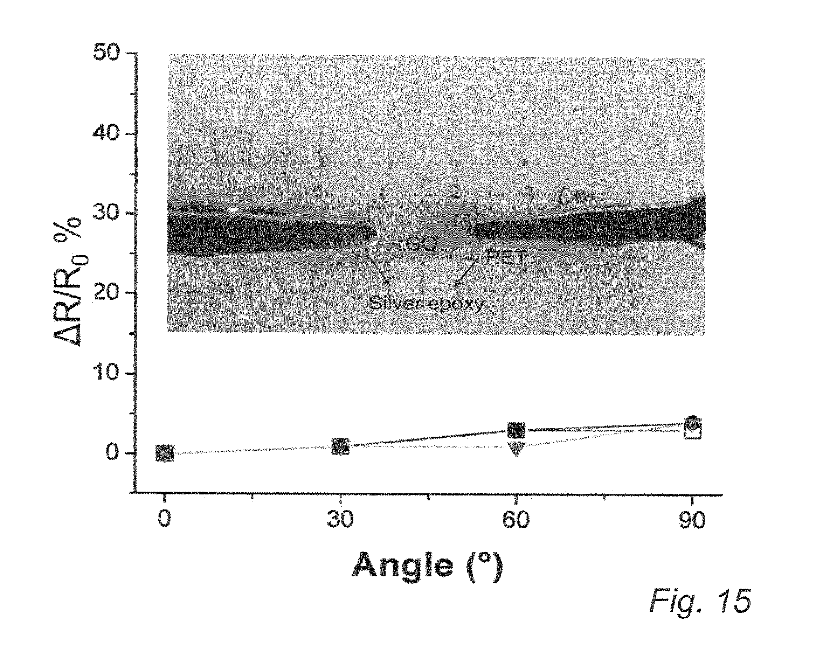

We made a simple device to test the mechanical properties of free thermally annealed GO film. The coated film was first annealed at 240°C for 1 hour and then floated on ammonia. After that it was transferred onto a PET film, followed by connecting two electrode (silver epoxy) on the film (insert in Fig. 15). Mechanical tests showed a less than 5% conductivity change when the film was bent by 90°, showing a good mechanical stability (Fig. 15). This mechanical stability suggested that the free floating film can be used as an electrode to make flexible electrodes.

### Sintering of indium tin oxide (ITO) nanoparticle film

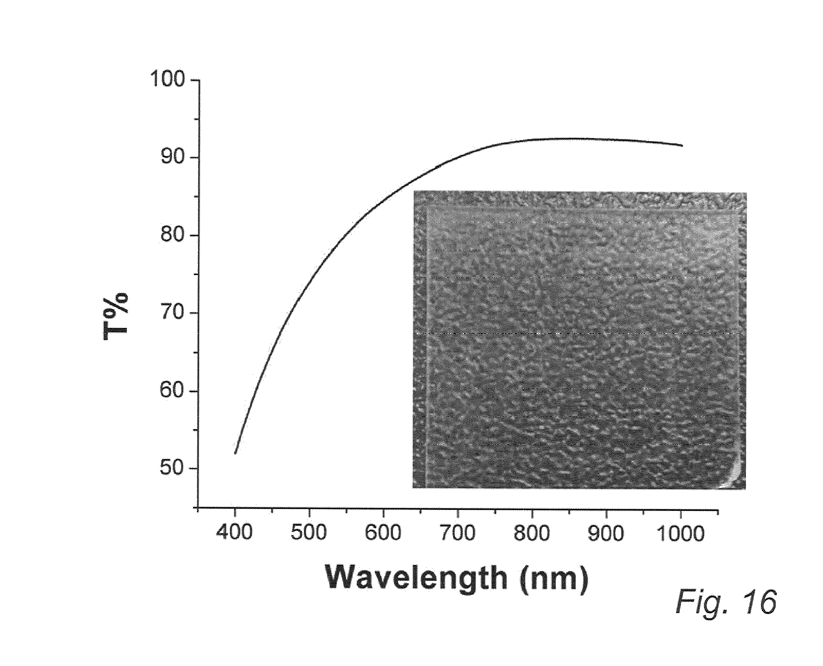

Laser sintering may be used for sintering nanoparticles and thus increase the conductivity of the film. Here, we sintered SFC coated ITO film on glass using a laser beam protected by nitrogen gas. The SFC coated ITO nanoparticle film was sintered by CO₂ laser using a 10 µm Versalaser 200 (Universal Laser Systems, Inc.) system. The power of the laser was from 2 to 60 % of the maximum power, 25W. The average sheet resistance of laser sintered ITO films was measured to 2.2 kΩ/sq. Fig. 16 shows the transmittance of the sintered film and a photo of sintered film on glass slide.. The resistivity after sintering was down to 2.1x10⁻⁵ Ω·m.

## Claims

1. A method for coating a substrate comprising the step of
a) penetrating at least one gas-liquid-gas interface with said substrate such that a composition present in the liquid and/or at the liquid-gas interface is coated on said substrate.

2. A method according to claim 1, wherein the at least one gas-liquid-gas interface of step a) is a foam.

3. A method according to claim 1, wherein the at least one gas-liquid-gas interface of step a) is a single liquid film in gas.

4. A method according to any one of claims 1-3, further comprising the step of
b) penetrating a further at least one gas-liquid-gas interface with the coated substrate such that a composition present in the further liquid and/or at the further liquid-gas interface is further coated on said substrate.

5. A method according to any previous claim, further comprising the step of
c) evaporating liquid from the coating of the coated surface.

6. A method according to any previous claim, further comprising the step of
d) sintering the coated surface.

7. A method according to any previous claim, wherein the substrate is penetrated at a speed of at least 10 cm/s, such as at least 50 cm/s, such at least 1 m/s, such as at least 2 m/s, such as about 5 m/s.

8. A method according to any previous claim, wherein the composition comprises at least one surfactant, surface active polymer and/or protein.

9. A method according to claim 8, wherein the composition comprises a colloid.

10. A coated substrate, wherein the coating has been applied according to any one of claims 1-9.

11. A coating system for coating a substrate comprising
- a sample holder for holding a substrate to be coated;
- a container for holding at least one gas-liquid-gas interface;
- means for moving the sample holder such that a substrate held by the sample holder penetrates at least one gas-liquid-gas interface held by said container.

12. A coating system according to claim 11, further comprising at least one further container for holding at least one further gas-liquid-gas interface.

13. A coating system according to claim 11 or 12, further comprising a reservoir connected to said container for holding a liquid capable of forming at least one gas-liquid-gas interface in said container or containers.

14. A coating system according to any one of claims 11-13, further comprising a gas reservoir and means for blowing gas from the gas reservoir into the reservoir for holding the liquid, thereby forming a foam or liquid film held by said container.

15. A coating system according to any one of claims 11-14, wherein the means for holding at least one gas-liquid-gas interface is a frame for holding a single liquid film.

16. A coating system according to any one of claims 11-15, wherein the system is a roll-to-roll coater and said sample holder is a roll for holding said substrate.
